# FASCICULE DE BREVET EUROPEEN

(11) **EP 2 190 741 B1**
(45) Date de publication et mention de la délivrance du brevet: **31.08.2011**
(21) Numéro de dépôt: 08805537.1
(22) Date de dépôt: 05.05.2008
(51) Int. Cl.: B64D 29/08

(54) **NACELLE DE TURBOREACTEUR A AMORTISSEURS POUR DEMI-COQUILLES**
TRIEBWERKSGONDEL MIT DÄMPFERN FÜR HALBSCHALEN
JET ENGINE NACELLE WITH DAMPERS FOR HALF-SHELLS

(30) Priorité: 20.08.2007 FR 0705900
(43) Date de publication de la demande: 02.06.2010
(73) Titulaire: Aircelle, 76700 Gonfreville l'Orcher (FR)
(72) Inventeur: LEDERLE, Stéphane, F-77300 Fontainebleau (FR)
(74) Mandataire: Jouanneau, Lionel
(86) Numéro de dépôt international: PCT/FR2008/000626
(87) Numéro de publication internationale: WO 2009/024654

(56) Documents cités:
- WO-A-2004/113707
- FR-A- 2 771 710
- US-A- 4 399 966
- US-B1- 6 622 963

## Description

L'invention se rapporte à une nacelle de turboréacteur d'un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée de deux demi-parties de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur.

Les deux demi-parties sont généralement montées pivotantes autour d'un axe longitudinal formant charnière en partie supérieure (à 12 heures) de l'inverseur. Les demi-parties sont maintenues en position de fermeture au moyen de verrous disposés le long d'une ligne de jonction située en partie inférieure (à 6 heures).

Chaque demi-partie est ouverte à l'aide d'au moins un vérin et est maintenue ouverte à l'aide d'au moins une bielle télescopique servant de béquille, ledit vérin et ladite bielle télescopique présentant chacun une première extrémité fixée généralement sur le turboréacteur et une seconde extrémité fixée dans un cadre avant de ladite demi-partie, ce cadre avant étant l'élément permettant de rattacher la section arrière à une partie fixe de la section médiane de la nacelle.

De manière générale, ces demi-parties sont actionnées par des vérins hydrauliques ou pneumatiques qui nécessitent un réseau de transport d'un fluide sous pression obtenu soit par piquage d'air, soit par prélèvement sur un circuit hydraulique de l'avion. Cet état de l'art est illustré par le document FR-A-2771710.

Ces systèmes requierent une maintenance importante, sont encombrants, et sont destinés à être progressivement remplacés par des systèmes d'actionnement électriques, plus légers et plus fiables.

Cependant, les actionneurs électromécaniques présentent également quelques inconvénients qu'il est nécessaire de résoudre pour pouvoir profiter pleinement des avantages qu'ils apportent en termes de gain de masse et d'encombrement.

Dans le cas de l'ouverture des demi-parties d'une section arrière, il est prévu, pour des raisons de sécurité, qu'une demi-partie ouverte ne puisse pas être refermée par le simple effet de la gravité. Il est donc nécessaire d'actionner le vérin électrique dans le sens correspondant pour refermer la demi-partie. Il convient toutefois de noter que la puissance requise à la fermeture est naturellement moins élevée que la puissance requise à l'ouverture des demi-parties.

Un cas d'endommagement fréquent survient lorsqu'un opérateur oublie de débloquer la béquille avant d'enclencher le vérin à la fermeture. Lorsqu'un tel oubli se produit, le moteur électrique se retrouve en situation de blocage.

La puissance à la fermeture étant inférieure à la puissance maximale du vérin, le moteur peut monter en puissance et essayer de vaincre l'obstacle. La bielle n'est alors généralement pas suffisamment résistante et risque donc de casser sous la contrainte exercée par le vérin électrique. D'un autre côté, il reste préférable que la béquille casse, car en cas de surdimensionnement pour éviter sa rupture, le blocage du moteur électrique du vérin risque de provoquer la surchauffe dudit moteur et ainsi d'endommager son électronique de commande et/ou ses bobines. Par ailleurs, un surdimensionnement de la béquille entraînerait une augmentation de masse non désirée.

Toutefois, un tel incident doit pouvoir être évité.

L'invention a pour but de remédier à un tel inconvénient, et consiste pour cela en une nacelle de turboréacteur comprenant une section avant d'entrée d'air, une section médiane destinée à entourer une soufflante du turboréacteur, et une section arrière formée à partir d'au moins deux demi-parties montées mobiles en rotation de manière à pouvoir se déployer chacune entre une position de travail et une position de maintenance sous l'action d'au moins un vérin et d'au moins une bielle télescopique apte à être bloquée en position déployée et présentant chacun respectivement une première extrémité fixée sur le turboréacteur et une seconde extrémité fixée dans la demi-partie correspondante, caractérisée en ce que les vérins sont associés à un ou plusieurs moyens d'actionnement équipés d'au moins un dispositif limiteur de couple actif lors d'une phase de rétractation desdits vérins et possédant une valeur seuil de couple inférieure à la résistance de la bielle en position déployée et bloquée.

Ainsi, en équipant les actionneurs de dispositifs limiteurs de couple actif à la fermeture, on s'assure que le couple exercé par les vérins sera toujours inférieur à la résistance de la bielle. La bielle ne risque donc plus de casser, le limiteur de couple débrayant le mécanisme d'actionnement des vérins lorsque la valeur seuil est dépassée.

Avantageusement, les moyens d'actionnement sont équipés d'un dispositif limiteur de couple actif à l'ouverture. La présence d'un dispositif limiteur de couple actif à l'ouverture permet de limiter les efforts s'exerçant sur la demi-partie lors de son ouverture, ces efforts étant susceptibles de causer des déformations dans la demi-partie du fait de leur caractère très localisé.

De manière préférentielle, le dispositif limiteur de couple possède des valeurs de tarage différentes pour l'ouverture et la fermeture.

Selon un mode préférentiel de réalisation de l'invention, les vérins sont des vérins actionnés par l'intermédiaire d'au moins un moteur électrique.

Avantageusement, les dispositifs limiteur de couple sont montés sur un arbre d'entraînement du moteur électrique.

De manière préférentielle, le ou les dispositifs limiteur de couple comprennent au moins un dispositif limiteur de couple dit à billes.

Il convient de noter que bien qu'orienté plus particulièrement vers les système d'ouverture comprenant des actionneurs électromécaniques, l'invention peut également être appliquées à des actionneurs pneumatiques ou hydrauliques.

La présente invention se rapporte également, d'une part, à un ensemble propulsif comprenant une nacelle selon l'invention disposée autour d'un turboréacteur, et d'autre part, un aéronef comprenant au moins un tel ensemble propulsif.

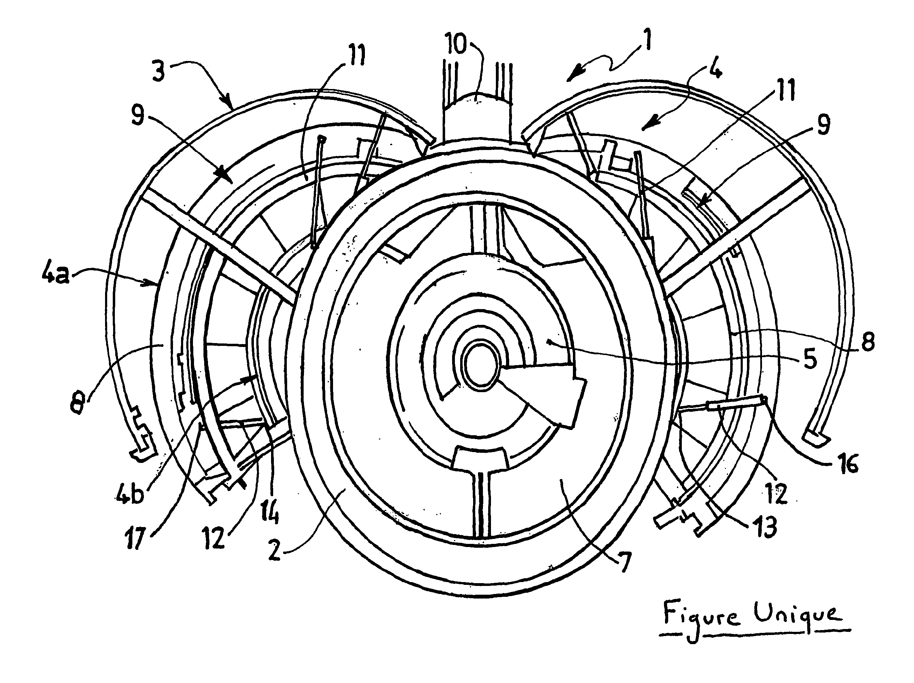

La mise en oeuvre de l'invention sera mieux comprise à l'aide de la description détaillée qui est exposée ci-dessous en regard du dessin annexé dans lequel la figure unique est une représentation schématique d'une nacelle vue de l'avant présentant une section arrière réalisée sous la forme de deux demi-parties montrées en position d'ouverture.

Une nacelle 1, telle que représentée sur la figure unique, constitue un logement tubulaire pour un turboréacteur double flux 5 et sert à canaliser les flux d'air qu'il génère par l'intermédiaire des pales d'une soufflante (non représentée), à savoir un flux d'air chaud traversant une chambre de combustion du turboréacteur, et un flux d'air froid circulant à l'extérieur du turboréacteur.

La nacelle 1 est destinée à être rattachée à une structure fixe d'un avion, par exemple sous une aile, ou au niveau du fuselage, par l'intermédiaire d'un mât 10.

La nacelle 1 possède une structure comprenant une section avant 2 formant une entrée d'air, une section médiane 3 entourant la soufflante du turboréacteur 5, et une section arrière 4 entourant le turboréacteur.

La section arrière 4 comprend, d'une part, une structure externe 4a intégrant généralement un système d'inversion de poussée et formant également une tuyère d'éjection, et d'autre part, une structure interne 4b de carénage du turboréacteur 5 définissant avec la structure externe 4a une veine 7 destinée à la circulation du flux froid.

La structure externe 4a, comprend un cadre avant 8 destiné à assurer la liaison de la structure aval externe 4a avec la partie médiane 2.

Plus précisément, la section arrière 4 est réalisée sous la forme de deux demi-parties 9 entourant le turboréacteur 5 et articulée chacune autour d'une ligne charnière située à proximité du mât 10 de manière à pouvoir passer alternativement d'une position de travail, où elle est au plus près du turboréacteur et ferme ainsi la nacelle 1, à une position de maintenance, où elle est déployée vers l'extérieur, comme représentée sur la figure unique.

L'ouverture et la fermeture des demi-parties 9 s'effectue sous l'action d'au moins un vérin 11 et d'au moins une bielle 12 télescopique présentant chacun respectivement une première extrémité 13, 14 fixée dans le turboréacteur, et une seconde extrémité 16, 17 fixée dans un cadre avant 8 de la demi-partie 9 correspondante.

La bielle 12 est apte à être bloquée de manière réversible en position déployée où elle supporte alors la demi-partie 9 correspondante.

Les vérin 11 est un vérin de type vis / bille apte à être actionné par l'intermédiaire d'un moteur électrique (non visible).

Ce moteur électrique comporte un arbre de sortie sur lequel est disposé, conformément à l'invention, un dispositif limiteur de couple.

Un limiteur de couple permet de désaccoupler une transmission lorsque le couple de transmission dépasse une certaine valeur prédéterminée, dite valeur de tarage. De tels dispositifs sont connus et disponibles dans le commerce.

Le dispositif limiteur mis en place sera au moins actif lors d'un mouvement de rétractation du vérin 11 correspondant à la fermeture d'une demi-partie 9.

Avantageusement, on pourra prévoir un dispositif limiteur de couple actif à l'ouverture.

Le dispositif limiteur de couple actif à l'ouverture pourra être distinct ou non du dispositif limiteur de couple actif à la fermeture. En effet, il existe des limiteurs de couple double effet permettant de fixer des valeurs de tarage différentes pour chaque sens de rotation de l'arbre du moteur électrique.

Grâce à l'invention, lors de l'enclenchement de la commande de fermeture des demi-parties 9 par un opérateur, si ce dernier a oublié de déengager la bielle 12 servant de béquille, alors le dispositif limiteur de couple permettra le désengagement de la transmission lorsque la demi-partie 9 vient buter contre la bielle 12. On évite ainsi la rupture de la bielle 12.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) de turboréacteur comprenant une section avant d'entrée d'air, une section médiane destinée à entourer une soufflante du turboréacteur, et une section arrière formée à partir d'au moins deux demi-parties montées mobiles en rotation de manière à pouvoir se déployer chacune entre une position de travail et une position de maintenance sous l'action d'au moins un vérin (11) et d'au moins une bielle (12) télescopique apte à être bloquée en position déployée et présentant chacun respectivement une première extrémité (13, 14) fixée sur le turboréacteur et une seconde extrémité (16, 17) fixée dans la demi-partie correspondante, **caractérisée en ce que** les vérins sont associés à un ou plusieurs moyens d'actionnement équipés d'au moins un dispositif limiteur de couple actif lors d'une phase de rétractation desdits vérins et possédant une valeur seuil de couple inférieure à la résistance de la bielle en position déployée et bloquée.

2. Nacelle selon la revendication 1, **caractérisée en ce que** les moyens d'actionnement sont équipés d'un dispositif limiteur de couple actif à l'ouverture.

3. Nacelle selon la revendication 2, **caractérisée en ce que** le dispositif limiteur de couple actif à la fermeture et le dispositif limiteur de couple actif à l'ouverture sont réunis en un seul dispositif double effet.

4. Nacelle selon la revendication 3, **caractérisée en ce que** le dispositif limiteur de couple possède des valeurs de tarage différentes pour l'ouverture et la fermeture.

5. Nacelle selon l'une quelconque des revendications 1 à 4, **caractérisée en ce que** les vérins sont des vérins actionnés par l'intermédiaire d'au moins un moteur électrique.

6. Nacelle selon la revendication 6, **caractérisée en ce que** le ou les dispositifs limiteur de couple sont montés sur un arbre d'entraînement du moteur électrique.

7. Nacelle selon l'une quelconque des revendications 1 à 6, **caractérisée en ce que** le ou les dispositifs limiteur de couple comprennent au moins un dispositif limiteur de couple dit à billes.

8. Ensemble propulsif comprenant une nacelle selon l'une quelconque des revendications 1 à 7 disposée autour d'un turboréacteur.

9. Aéronef comprenant au moins un ensemble propulsif selon la revendication 8.

## Claims

1. A jet engine nacelle (1) comprising an air intake front section, a median section intended for surrounding a jet engine fan, and a rear section formed from at least two half-portions mounted so as to be mobile in rotation so that each may be deployed between a working position and a maintenance position under the action of at least one actuator (11) and of at least one telescopic connecting rod (12) able to be blocked in the deployed position and each respectively having a first end (13, 14) attached on the jet engine and a second end (16, 17) attached on the corresponding half-pottion, **characterized in that** the actuators are associated with one or more actuation means equipped with at least one active torque-limiting device during a retraction phase of said actuators and having a torque threshold value of less than the resistance of the connecting rod in the deployed and blocked position.

2. The nacelle according to claim 1, **characterized in that** the actuation means are equipped with an active torque-limiting device upon opening.

3. The nacelle according to claim 2, **characterized in that** the active torque-limiting device upon closing and the active torque-limiting device upon opening are brought together in a single dual effect device.

4. The nacelle according to claim 3 **characterized in that** the torque-limiting device has different setpoint values for opening and for closing.

5. The nacelle according to any of claims 1 to 4, **characterized in that** the actuators are actuators actuated via at least one electric motor.

6. The nacelle according to claim 5, **characterized in that** the torque-limiting device(s) is(are) mounted on a driving shaft of an electric motor.

7. The nacelle according to any of claims 1 to 6, **characterized in that** the torque-limiting device(s) comprise(s) at least one so-called ball torque-limiting device.

8. A propelling assembly comprising a nacelle according to any of claims 1 to 7, arranged around a jet engine.

9. An aircraft comprising at least one propelling assembly according to claim 8.

## Patentansprüche

1. Strahltriebwerksgondet (1), welche einen vorderen Abschnitt für den Lufteintritt, einen mittleren Abschnitt, der einen Lüfter eines Strahltriebwerks umgibt, und einen hinteren Abschnitt, der aus mindestens zwei Halbteilen ausgebildet ist, die derart drehbeweglich angeordnet sind, dass jedes von ihnen zwischen einer Arbeitsposition und einer Wartungsposition ausschwenkbar ist und zwar durch Einwirkung mindestens eines Zylinders (11) und mindestens einer, in der ausgeschenkten Stellung arretierbaren Teleskopstange (12), die jeweils für sich ein erstes, am Strahltriebwerk befestigtes Ende (13,14) und ein zweites, am entsprechenden Halbteil befestigtes Ende (16,17) aufweisen, umfasst und **gekennzeichnet ist dadurch,** dass die Zylinder einem oder mehreren Betätigungsmitteln, welche mit mindestens einer aktiven Begrenzungsvorrichtung für Drehmoment für die Einzugsphase der Zylinder versehen sind und einen Schwellwert des Drehmoments aufweisen, der geringer ist als der Widerstand des Teleskopstabs in ausgeschwenkter und gesperrter Stellung, zugeordnet sind.

2. Strahltriebwerksgondel nach Anspruch 1 **gekennzeichnet dadurch, dass** die Betätigungsmittel mit einer aktiven Begrenzungsvorrichtung für Drehmoment für das Öffnen versehen sind.

3. Strahltriebwerksgondel nach Anspruch 2 **gekennzeichnet dadurch, dass** die aktive Begrenzungsvorrichtung für Drehmoment für das Schließen und die aktive Begrenzungsvorrichtung für Drehmoment für das Öffnen in einer einzigen, doppelt wirkenden Vorrichtung zusammengefasst sind,

4. Strahltriebwerksgondel nach Anspruch 3 **gekennzeichnet dadurch, dass** die Begrenzungsvorrichtung für Drehmoment über verschiedene Einstellwerte für das Öffnen und Schließen verfügt.

5. Strahltriebwerksgondel nach einem der Ansprüche 1 bis 4 **gekennzeichnet dadurch, dass** die Zylinder von der Art sind, die mittels mindestens eines Elektromotors betätigt werden.

6. Strahltriebwerksgondel nach Anspruch 6 **gekennzeichnet dadurch, dass** die eine oder mehreren Begrenzungsvorrichtungen für Drehmoment auf einer Antriebswelle des Elektromotors angeordnet sind.

7. Strahltriebwerksgondel nach einem der Ansprüche 1 bis 6 **gekennzeichnet dadurch, dass** die eine oder mehreren Begrenzungsvorrichtungen für Drehmoment mindestens eine Begrenzungsvorrichtung für Drehmoment vom Typ mit Kugeln umfassen.

8. Vortriebseinrichtung, welche eine Triebwerksgondel nach einem der Ansprüche 1 bis 7, die ein Strahltriebwerk umgibt, enthalten.

9. Luftfahrzeug, welches mindestens eine Vortriebseinrichtung nach Anspruch 8 beinhaltet
